# EUROPEAN PATENT APPLICATION

(11) **EP 2 224 782 A1**
(43) Date of publication of application: **01.09.2010**
(21) Application number: 09002743.4
(22) Date of filing: 26.02.2009
(51) Int. Cl.: H04W 88/10

(54) **Multi standard base station for and method of supporting two or more radio standards of a telecommunication network**

(71) Applicant: Alcatel-Lucent Deutschland AG, 70435 Stuttgart (DE)
(72) Inventor: Loewel, Thomas, 12247 Berlin (DE); Wich, Andreas, 70569 Stuttgart (DE)
(74) Representative: LOUIS, PÖHLAU, LOHRENTZ

(57) **Abstract**

The invention concerns a multi standard base station (1) and a method for supporting two or more radio standards of a telecommunication network. The multi standard base station comprises a processing unit (2). The processing unit (2) of the multi standard base station (1) comprises one or more field-programmable gate arrays (3a, 3b, 3c, 3d) providing a plurality of partial reconfiguration regions (30a, 30b, 30c, 30d, 30e, 30f). Said plurality of partial reconfiguration regions (30a, 30b, 30c, 30d, 30e, 30f) are of predefined size, comprise a plurality of logic circuits and are individually re-programmable during operation of the one or more field-programmable gate arrays (3a, 3b, 3c, 3d). Two or more partial reconfiguration regions of said plurality of partial reconfiguration regions (30a, 30b, 30c, 30d, 30e, 30f) are programmed as partial reconfiguration modules for provision of baseband processing functions. At least three of said plurality of partial reconfiguration regions (30a, 30b, 30c, 30d, 30e, 30f) comprising at least two of said partial reconfiguration regions programmed as partial reconfiguration modules for provision of baseband processing functions are sequentially arranged and interconnected by a static bus system to form a static design chain (30) for successive execution of said partial reconfiguration modules of the static design chain (30). Each partial reconfiguration region of the static design chain (30) with the exception of the first partial reconfiguration region of the static design chain (30) is interconnected with its preceding partial reconfiguration region of the static design chain (30) by means of a respective static bus (31) of the static bus system.

## Description

The present invention relates to a multi standard base station for and a method of supporting two or more radio standards of a telecommunication network.

The technical field of the present invention is directed to multi standard base stations. A multi standard base station is a flexible base station that supports more than two radio standard.

An ordinary multi standard base station provides a wide range of different radio standards which are permanently implemented into its control unit and/or processing unit in order to provide a maximum of throughput and bandwidth to the telecommunication network. A maximum of bandwidth is achieved by means of specialized electronic circuits. These specialized electronic circuits are specially designed hardware pieces to provide baseband processing functionality. Adaptation of the multi standard base station to further and future radio standards is only possible by upgrading the control unit and/or processing unit of the ordinary multi standard base station, i.e. by replacing the control unit and/or processing unit with a respectively enhanced new control unit and/or processing unit. Such a specialized hardware approach for provision of base band processing by means of an ordinary multi standard base station is rapidly getting more and more cost ineffective because of the steady increasing rate of further development of radio standard, protocols and the increasing demands on telecommunication services, like multi media service with improved quality of service. These steadily increasing rates of demands require more frequent replacement of the specialized hardware, resulting in steadily increasing maintenance costs of the ordinary multi standard base station.

It is the object of the present invention to provide an improved multi standard base station for supporting two or more radio standards of a telecommunication network. It is further the object of the present invention to provide an improved method of supporting two or more radio standards of a telecommunication network.

The object of the present invention is achieved by a multi standard base station for supporting two or more radio standards of a telecommunication network comprising a processing unit, wherein the processing unit of the multi standard base station comprises one or more field-programmable gate arrays providing a plurality of partial reconfiguration regions, wherein said plurality of partial reconfiguration regions are of predefined size, comprise a plurality of logic circuits and are individually re-programmable during operation of the one or more field-programmable gate arrays, wherein two or more partial reconfiguration regions of said plurality of partial reconfiguration regions are programmed as partial reconfiguration modules for provision of baseband processing functions, wherein at least three of said plurality of partial reconfiguration regions comprising at least two of said partial reconfiguration regions programmed as partial reconfiguration modules for provision of baseband processing functions are sequentially arranged and interconnected by a static bus system to form a static design chain for successive execution of said partial reconfiguration modules of the static design chain, and wherein each partial reconfiguration region of the static design chain with the exception of the first partial reconfiguration region of the static design chain is interconnected with its preceding partial reconfiguration region of the static design chain by means of a respective static bus of the static bus system. The object of the present invention is also achieved by a method of supporting two or more radio standards by a multi standard base station of a telecommunication network, wherein a processing unit is provided which comprises one or more field-programmable gate arrays, the one or more field-programmable gate arrays comprise a plurality of logic circuits; a plurality of partial reconfiguration regions of predefined size is defined; the plurality of partial reconfiguration regions are provided by the one or more field-programmable gate arrays; two or more partial reconfiguration regions of said plurality partial reconfiguration regions are programmed as partial reconfiguration modules for provision of baseband processing functions; a group of at least three of said plurality of partial reconfiguration regions is created, the group comprising at least two of said partial reconfiguration regions programmed as partial reconfiguration modules for provision of baseband processing functions, said partial reconfiguration regions of the group are sequentially arranged and interconnected by a static bus system to form a static design chain for successive execution of said partial reconfiguration modules of the group, and each partial reconfiguration region of the static design chain with the exception of the first partial reconfiguration region of the static design chain is interconnected with its preceding partial reconfiguration region of the static design chain by means of a respective static bus of the static bus system; and one or more partial reconfiguration regions of the plurality partial reconfiguration regions are individually re-programmed during operation of the one or more field-programmable gate arrays.

The present invention provides a surprisingly flexible multi standard base station which is adaptable to current needs of the telecommunication network within a short period of time. The multi standard base station of the present invention allows for single module upgrade of partial reconfiguration modules of the static design chain, i.e. individual re-programming of single partial reconfiguration regions during operation of the one or more field-programmable gate arrays. There is no time consuming re-programming with a down-time of the one or more field-programmable gate arrays, because there is no need to perform the re-programming by means of uploading to the one or more field-programmable gate arrays a full block software comprising all necessary modules required to provide baseband processing functionality. The multi standard base stations of the present invention is further able to load balance baseband processing by re-programming one or more partial reconfiguration regions of the plurality of partial reconfiguration regions, wherein the one or more partial reconfiguration regions are programmed as partial reconfiguration modules for provision of baseband processing functions. Load balancing can be achieved for instance when the multi standard bases station comprises more than one static design chain. For example, the multi standard base station comprise three static design chains wherein one static design chain is designated to support UMTS (UMTS = Universal Mobile Telecommunications System) and the other two static design chains are designated to support GSM (GSM = Global System for Mobile Communications, or GSM = Groupe Spécial Mobile). However, the current needs of the telecommunication network may be such that more throughput in UMTS is required, then the multi standard base station re-programs one or more partial reconfiguration regions of one of the static design chains providing GSM to provide UMTS. During the re-programming of said design chain the other two design chains continue to provide baseband processing while selected one or more partial reconfiguration regions of said static design chain are re-programmed. In general, it is not required that all partial reconfiguration regions of said static design chain are re-programmed, since there may be one or more modules useable with GSM and UMTS. Furthermore, the multi standard base station of the present invention provides possibly future radio standards. An ordinary multi base station provides in contrast to the multi standard base stations of the present invention a limited functionality of baseband processing, since hardware resource are limited and dedicated to the essential functionality in order to reduce the costs. In other words, an ordinary multi standard base station has to be over dimensioned concerning its hardware functionality in order to provide a functionality and flexibility comparable to the multi standard base stations of the present invention, wherein such an ordinary multi standard base station would be much more expensive than that of the present invention. The multi standard base station of the present invention allows implementation of future radio standards by its ability of being re-programmable during operation. Consequently, multi standard base station of the present invention provides an improved mean operation time over ordinary multi base stations. Thereby, the multi standard base station of the present invention provides reduced significance of investment costs than an ordinary multi base station.

Further advantages are achieved by embodiments of the present invention indicated by the dependent claims.

It is possible, that one or more field-programmable gate arrays provide one or more partial reconfiguration regions which are programmable, preferably programmed as partial reconfiguration module, during operation of the one or more field-programmable gate arrays and which are not a partial reconfiguration region of a static design chain. Preferably, these one or more partial reconfiguration regions are programmed as static module, connection module, static logic and/or field-programmable gate array resources which may not be reconfigured or re-programmed during operation of the one or more field-programmable gate arrays.

Furthermore, it is also possible that the connection module is formed low complexity routing/switching connection modules, which requires only a small area of the field-programmable gate array. The connection module is taking thereby only little area space of field-programmable gate array and it allows for optimized resource usage by adding additional degrees of freedom to the designing process of the multi standard base station.

According to a preferred embodiment of the present invention, one or more partial reconfiguration regions of the plurality of partial reconfiguration regions are programmed as bypass modules for interconnecting neighboring partial reconfiguration regions. A bypass module may not contribute to the baseband processing functionality of the static design chain. The bypass module may serve as place holder for future modules uploaded during reconfiguration, i.e. re-programming, of the partial reconfiguration region associated with the bypass module of the static design chain. The bypass module may act as a connecting module, and thereby the bypass module can route signals received from its preceding partial reconfiguration module of its static design chain via the static bus system to its subsequent partial reconfiguration module of its static design chain via the static bus system.

According to a preferred embodiment of the present invention, the one or more field-programmable gate arrays comprise one or more connection modules for interconnecting one or more partial reconfiguration regions of the plurality of partial reconfiguration regions. Preferably, the connection module can be a bypass module of the static chain.

According to a preferred embodiment of the present invention, one or more partial reconfiguration regions provided by the one or more field-programmable gate arrays are programmed as connection modules for interconnecting one or more partial reconfiguration regions of the plurality of partial reconfiguration regions. In a special case, the connection module can be a bypass module of the static chain. The connection module can interconnect via the static bus system partial reconfiguration regions which are not partial reconfiguration regions of the static design chain. These partial reconfiguration regions which are not partial reconfiguration regions can be programmed with modules which provide further functionality common to all radio supported standards, e.g. common input/output functionality, and/or common baseband processing functionality.

According to a preferred embodiment of the present invention, one or more field-programmable gate arrays of the one or more field-programmable gate arrays comprise two or more static design chains. It is further possible, according to a preferred embodiment of the present invention, that the two or more static design chains are interconnected by one or more connection modules and/or are interconnected by the static bus system. It is also possible, that the two or more static design chains are interconnected by one or more partial reconfiguration regions provided by the one or more field-programmable gate arrays and programmed as connection module. Thereby, it is possible that the one or more static design chains are exchange information and share information among each other via the connection module and/or are able to access hardware resources of the multi standard base station.

According to a preferred embodiment of the present invention, one or more of the one or more field-programmable gate arrays provide a static logic interconnected with the plurality of partial reconfiguration regions by means of a connection module. It is possible, that the static logic interconnected with the plurality of partial reconfiguration regions is a partial reconfiguration region of the one or more field-programmable gate arrays which will be only one-time programmed and never re-programmed. Preferably, the static logic provides logic circuits which are frequently used by one or more modules, i.e. partial reconfiguration modules, in particular one or more modules of the design chain, for the provision of baseband processing functions.

Preferably, a connection module is a design depend connection module which is predefined and will not re-programmed during operation of the one or more field-programmable gate arrays.

According to a preferred embodiment of the present invention, each of the two or more partial reconfiguration regions programmed as partial reconfiguration module comprises a sub module providing a bus macro defining a predefined interface to the static bus system. Preferably, the static bus macro ensures that after re-programming of a partial reconfiguration region a static interface to the static bus system is present which is able to block signals of an accidental defectively re-programmed partial reconfiguration region in order to ensure that the operation of other partial reconfiguration modules as well as other entities or hardware and/or software resources of the multi standard base station is not affected by a respective defective re-programmed partial reconfiguration module.

According to a preferred embodiment of the present invention, one or more of the one or more field-programmable gate arrays comprise one or more field-programmable gate array resources. Preferably, the one or more field-programmable gate array resources provide hard-macro multipliers, memory and/or I/O pins (I/O pins = Input/Output pins). The one or more field-programmable gate array resources allow saving array space of the one or more field-programmable gate arrays, wherein the saved array space is available for further definition of partial reconfiguration region. Thereby, it is possible use more complex and/or advanced partial reconfiguration modules. Preferably, one or more field-programmable gate array resources provide resources frequently required by baseband processing functions. Furthermore, the one or more field-programmable gate array resources are interconnected with one or more of the partial reconfiguration regions provided by the one or more field-programmable gate arrays and/or with the static design chain by means of one or more partial reconfiguration regions provided by the one or more field-programmable gate arrays programmed as connection module. Preferably, the one or more field-programmable gate array resources are hardware units providing the desired baseband processing functionality, wherein in such a case the one or more field-programmable gate array resources are part of resource layer and the one or more of the partial reconfiguration modules associated with the static design chain formed with the respective one or more of the partial reconfiguration regions are part of a functional layer. A design dependent connection module may serve as interface between the resource layer and the functional layer.

Preferably, one or more partial reconfiguration regions of the plurality of partial reconfiguration regions are programmed as low complex routing and/or switching module. It is also possible, that one or more field-programmable gate array resources provide a low complex routing and/or a switching module.

It is possible, that the one or more field-programmable gate arrays comprise a connection module. The connection module can be formed as a static connection module which is non-programmable or can be formed as programmable connection module which is reconfigurable. Furthermore, a static connection module can provide a further bus system. Preferably, the connection module interconnects partially or interconnects all entities of the one or more field-programmable gate arrays, wherein the entities comprise one or more partial reconfiguration regions of the plurality of partial reconfiguration regions, one or more static design chains, a static logic, and/or one or more field-programmable gate array resources. The connection module can provide the functionality of a low complex routing and/or switching module.

According to a preferred embodiment of the present invention, the two or more partial reconfiguration region of the plurality of partial reconfiguration regions programmed as partial reconfiguration modules for provision of baseband processing functions provide a functionality selected from the group of CDMA (CDMA = Code division multiple access) / OFDM (OFDM = Orthogonal Frequency Division Multiplex) processing, CRC (CRC = cyclic redundancy check), Scrambling, Encoding, Decoding and Mapping.

According to a preferred embodiment of the present invention, one or more of the plurality of partial reconfiguration regions provided by the one or more field-programmable gate arrays are of different size. In general, partial reconfiguration regions of the one or more field-programmable gate arrays are static programmed or re-programmable and designated to different functional classes, like partial reconfiguration modules of static design chains, connection modules, static logic, and/or field-programmable gate array resource of different logic complexity and thereby requiring differently sized areas selected from the one or more field-programmable gate arrays. However, it is also possible that partial reconfiguration regions provided by the one or more field-programmable gate arrays are all of the same size.

According to a preferred embodiment of the present invention, the multi standard base station is adapted to support two or more radio standards of the group of GSM, UMTS, Edge (Edge = Enhanced Data for GSM Evolution), WiMAX (WiMAX = Worldwide Interoperability for Microwave Access) by means of the two or more partial reconfiguration regions programmed as partial reconfiguration modules for provision of baseband processing functions.

According to a preferred embodiment of the present invention, the processing unit of the multi standard base station comprises an interface and controlling unit for connecting and controlling the one or more field-programmable gate arrays. Preferably, the interface of the processing unit of the multi standard base station provides the functionality to communicate via fixed line telecommunication network, mobile telecommunication networks and/or IP-packed based telecommunication networks (IP = Internet protocol), like the Internet.

According to a preferred embodiment of the present invention, a further group of at least three of said plurality of partial reconfiguration regions is created. The further group comprising at least two of said partial reconfiguration regions programmed as partial reconfiguration modules for provision of baseband processing functions. Said partial reconfiguration regions of the further group are sequentially arranged and interconnected by a static bus system to form a further static design chain for successive execution of said partial reconfiguration modules of the further group. Each partial reconfiguration region of the further static design chain with the exception of the first partial reconfiguration region of the further static design chain is interconnected with its preceding partial reconfiguration region of the further static design chain by means of a respective static bus of the static bus system. Thereby, the further static design chain can be formed analogously to the static design chain. Furthermore, one or more partial reconfiguration regions (30ee) of the group and/or the further group are re-programmed for dedicating the static design chain and/or the further static design chain to a radio standard of the two or more radio standards during operation of the one or more field-programmable gate arrays for providing load balanced baseband processing.

It is possible, to provide further static design chains, i.e. more than two static design chains, which are similar or identical formed to the static design chain or the further static design chain. With these further static design chains, it is possible to further improve the load balanced baseband processing. Preferably, the further static design chains are connected with connection modules, field-programmable gate array resource, static logic, etc. as in the forgoing described.

Preferably, the static bus system is predefined, wherein a bandwidth is predetermined as well as a bus width. The bus width is preferably 8bit to 128bit wide. The preferred bus width of the static bus system is 64bit to 128bit wide for interconnecting the partial reconfigurations regions of the static design chain. Preferably, a bus width of the static bus system is 8bit to 48bit wide for interconnecting each partial reconfigurations region, field-programmable gate array resource, and/or a static logic with a connection module. Preferably, the width of the static bus system is as wide as possible for provision of a maximum of bandwidth and/or bit rate. A high bit rate is required to provide a high quality of service in telecommunication networks.

It is further possible that a field-programmable gate array resource is interconnected with a partial reconfigurations region of the static design chain without an interconnected connection module by means of the static bus system. In such a case, a bus width of the static bus system of 8bit to 48bit can be used.

Furthermore, the one or more field-programmable gate arrays provide an arbiter for controlling the connections between the partial reconfigurations region of the one or more field-programmable gate arrays, wherein the arbiter is connection with enhanced functionality to provide improved baseband processing functionality of the multi standard base station. It is in particular possible to load balance field-programmable gate array resources and the static design chain by means of the arbiter.

In particular, it is possible that partial reconfiguration regions of a field-programmable gate arrays are unused or programmed with a bypass module. However, these unused partial reconfiguration regions - which are part of a static design chain - can be used by another static design chain formed on the same field-programmable gate array. One part of such an partial reconfiguration region is programmed as bypass module of the one static design chain and the remaining part is programmed as a module, preferably requiring logic circuits of low complexity, of the other static design chain.

These as well as further features and advantages of the present invention will be better appreciated by reading the following detailed description of presently preferred embodiments taken with the accompanying drawings of:
- Figure 1: shows a functional view of multi standard base station for supporting two or more radio standards of a telecommunication network comprising a processing unit.
- Figure 2: shows a functional view of a first embodiment of a field-programmable gate array in a first state.
- Figure 3: shows a functional view of the first embodiment of a field-programmable gate array in a second state.
- Figure 4: shows a functional view of a second embodiment of a field-programmable gate array.
- Figure 5: shows a functional view of a third embodiment of a field-programmable gate array.

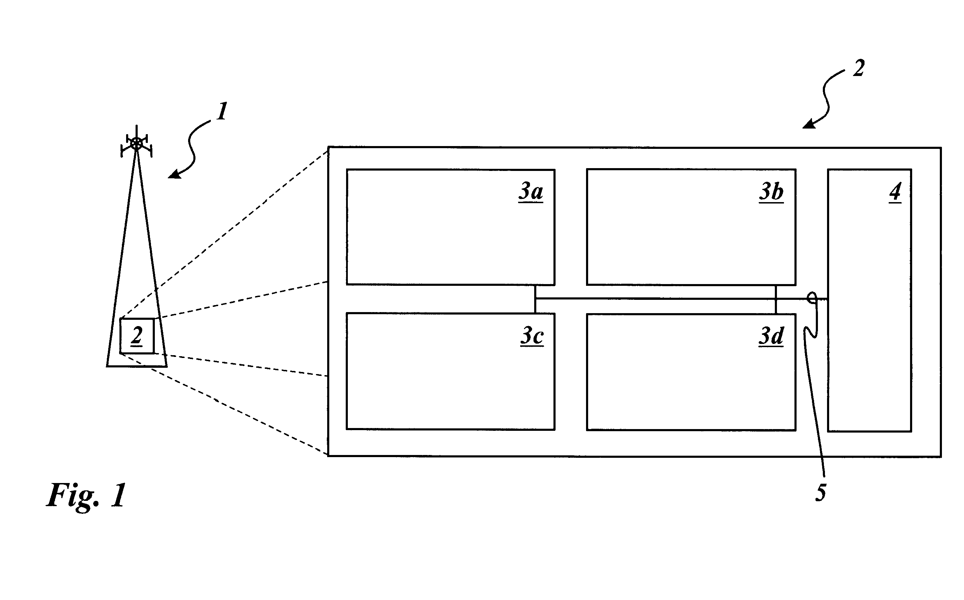

Figure 1 shows a functional view of multi standard base station 1 for supporting two or more radio standards of a telecommunication network comprising a processing unit 2. The processing unit 2 of the multi standard base station 1 comprises one or more field-programmable gate arrays 3a, 3b, 3c, 3d and a control unit 4.

Each FPGA 3a, 3b, 3c, 3d (FPGA = field-programmable gate array) is a device of the class of semiconductor devices, which can be configured after manufacturing, and is therefore called "field-programmable". Each FPGA 3a, 3b, 3c, 3d is programmable or re-programmable by means of a specific HDL (HDL = hardware description language) in order to provide a logic of a logic diagram and/or execute a source code. In particular, Each FPGA 3a, 3b, 3c, 3d can provide any logical function which any ASIC (ASIC = application specific integrated circuit) is possibly able to perform. However, in contrast to the ASIC a FPGA is re-programmable. Each FPGA 3a, 3b, 3c, 3d comprises programmable logic devices which are also called "logic blocks", wherein an hierarchy of re-configurable/re-programmable interconnects allowing the logic blocks to be interconnected similar to a "re-programmable" breadboard yet on a single chip, i.e. a single FPGA semiconductor chip. It is possible, that an embodiment according to the present invention - yet not shown - comprises only one or two FPGAs.

The logic blocks of a FPGA 3a, 3b, 3c, 3d can provide functionality of logic gates, like AND-, OR-, NOT-, NAND-, NOR- and/or XOR-gates. It is also possible, that the FPGAs 3a, 3b, 3c, 3d provide more complex logic circuits and/or a combination of logic circuits, like flip-flops or memory elements.

Furthermore, the four FPGAs 3a, 3b, 3c, 3d are interconnect via connecting bus 5 with the control unit 4. The control unit 4 controls the FPGAs 3a, 3b, 3c, 3d comprising functionality of load balancing the work load required for baseband processing and interfaces the FPGAs 3a, 3b, 3c, 3d with a main control unit (not shown) of multi standard base station 1. However, it is possible that the main control unit is integrate in the processing unit 4.

The multi standard base station 1 of the present invention further comprises interfaces with communication means, and respective communication stacks, for communication via fixed line telecommunication network, mobile telecommunication networks and/or IP-packed based telecommunication networks (IP = Internet protocol), like the Internet.

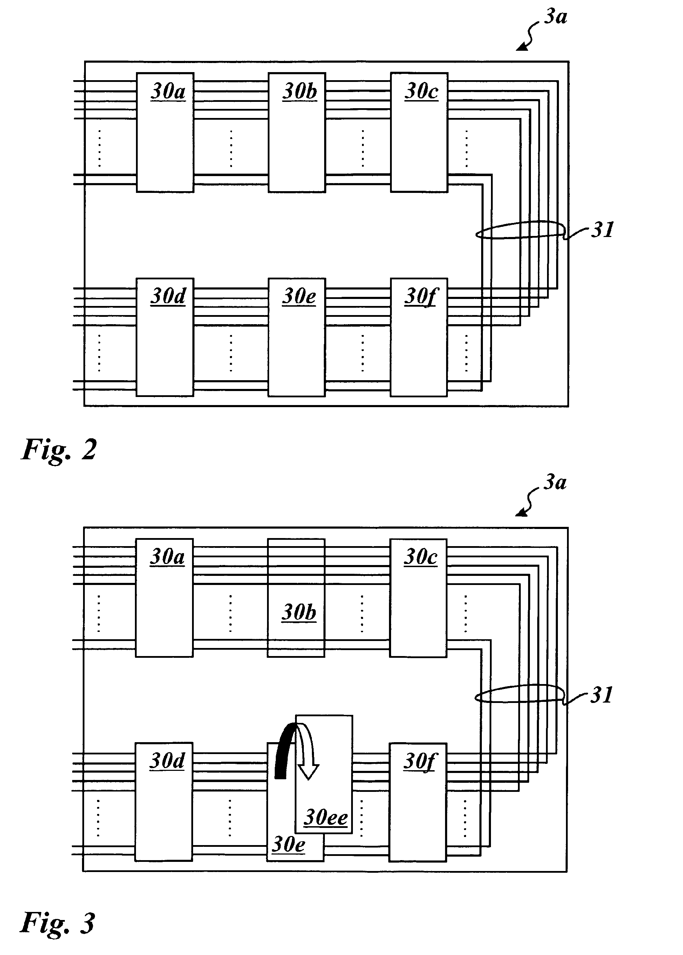

Figure 2 shows a functional view of a first embodiment of a field-programmable gate array 3a in a first state. A plurality of partial reconfiguration regions 30a, 30b, 30c, 30d, 30e, 30f formed as a static design chain is provided. Partial reconfiguration regions of a FPGA are regions of predefined size which can be re-programmed during operation of the FPGA. Said plurality of partial reconfiguration regions 30a, 30b, 30c, 30d, 30e, 30f comprise a plurality of logic circuits, which are individually re-programmable during operation of the one or more field-programmable gate arrays 3a, 3b, 3c, 3d. In Figure 2 are six partial reconfiguration regions shown. However, there can be many more, e.g. at least 10 or 20 to 50, of these partial reconfiguration regions.

Returning back the static design chain. The static design chain comprises these - exemplarily pictured - six partial reconfiguration regions 30a, 30b, 30c, 30d, 30e, 30f sequentially arranged and interconnected by a static bus 31 of a static bus system to form the static design chain. Each partial reconfiguration region of the static design chain with the exception of one, i.e. the first, partial reconfiguration region of the static design chain is interconnected with its preceding partial reconfiguration region of the static design chain. That means with exception of the first partial reconfiguration region 30a of the static design chain, each partial reconfiguration region 30b, 30c, 30d, 30e and 30f of the static design chain is connect with its input-side via the static bus 31 of the static bus system with an output-side of an preceding partial reconfiguration region 30a, 30b, 30c, 30d, and 30e of the static design chain, and thereby forming the static design chain. Furthermore, one or more partial reconfiguration regions of the static design chain are programmed as partial reconfiguration module for successive execution of said partial reconfiguration modules associated with the respective partial reconfiguration region of the static design chain. Two or more partial reconfiguration regions of the plurality of partial reconfiguration regions 30a, 30b, 30c, 30d, 30e, 30f are programmed as partial reconfiguration module for provision of baseband processing function.

Figure 3 shows a functional view of the first embodiment of a field-programmable gate array 3a in a second state. The partial reconfiguration region 30e is re-programmed. The banded arrow in Figure 3 indicates the re-programming of the partial reconfiguration region 30e with a new partial reconfiguration module 30ee. The process of re-programming can be conducted during a down-time of the FPGA 3a, i.e. while the FPGA 3a is not operating, or during operation of the FPGA 3a.

Furthermore, the partial reconfiguration region 30b - as shown in Figure 3 - is programmed as a bypass module. A bypass module receives an output generated by the partial reconfiguration module associated with the partial reconfiguration region 30a via the static bus 31 and routes the output as input without changing it to the partial reconfiguration module associated with the partial reconfiguration region 30c via the static bus 31 of the static bus system.

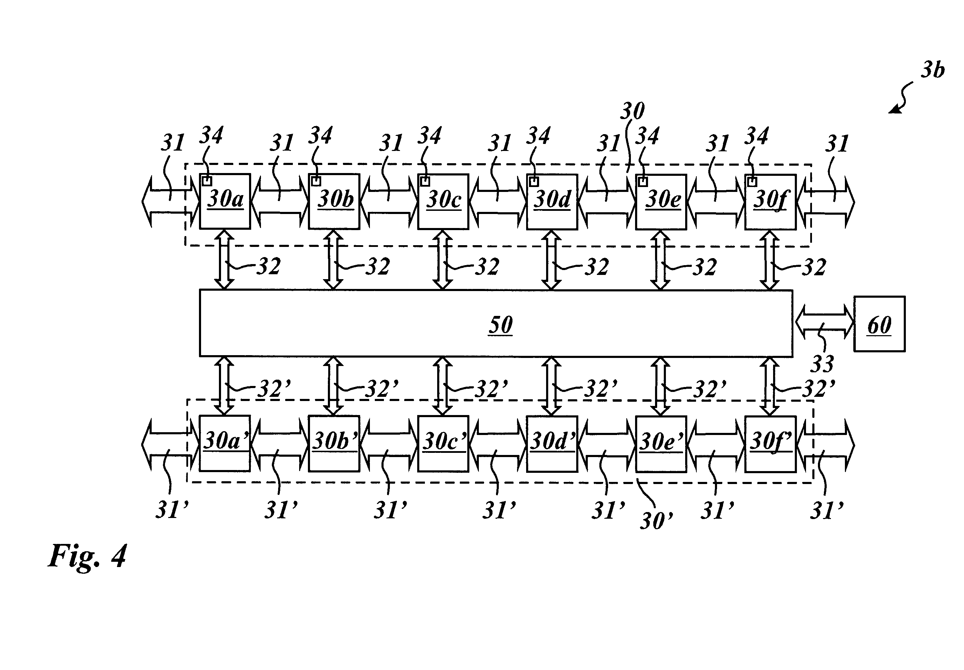

Figure 4 shows a functional view of a second embodiment of a field-programmable gate array 3b. The FPGA 3b of the second embodiment comprises two static design chains 30, 30'. Each static design chain 30, 30' is corresponding to the static design chain of the first embodiment. Furthermore, the FPGA 3b comprises a connection module for interconnecting each static design chains 30, 30' with the other static design chains 30', 30, respectively for exchanging information and/or data, and the a static logic 60 providing common logic circuits to both static design chains 30, 30' for minimizing the predefined size of the partial reconfiguration regions 30a - 30f, 30a' - 30f. The static bus system is indicated by double arrows 31, 31', 32, 32' and 33. The bus width used for interconnecting the partial reconfiguration regions 30a - 30f of the static design chain 30, the partial reconfiguration regions 30a' - 30f of the static design chain 30', the connection module 50, and the static logic is indicated by the width of the arrows. The bus width corresponds to the maximum band width available by the FPGA 3b. In the present second embodiment of the FPGA 3b, the bus width of the interconnection indicated by the arrow 31, 31' is 128bit wide, the bus width of the interconnection indicated by the arrow 32, 32' is 8bit wide, and the bus width of the interconnection indicated by the arrow 33 is 64bit wide. Each of the partial configuration regions 30a - 30f of the static design chain 30 programmed as partial reconfiguration module comprises a sub module providing a bus macro 34 defining a predefined interface to the static bus system. The bus macro 34 defines also predefined interface to the connection module 50. The other static design chain 30' can provide corresponding bus macro for defining a predefined interface to the static bus system, and thereby also define a predefined interface to the connection module 50.

Furthermore, it is possible that one or more partial configuration regions 30a - 30f of the static design chain 30 are programmed a special bypass module or connection module which enhances the connection bandwidth of the static design chain 30 to the connection module or another partial reconfiguration region of the FPGA 3b, e.g. the static logic 60 or to module programmed on one of the partial configuration regions 30a' - 30f of the other static design chain 30'.

By means of the two static design chains 30, 30' load balancing can be achieved. For example, the static design chain 30 is designated to support UMTS and the other static design chains 30' is designated to support GSM. However, the current needs of the telecommunication network may be such that higher throughput in GSM is required, then the multi standard base station 1 re-programs one or more partial reconfiguration regions of one of the static design chains 30 to provide GSM instead of providing UMTS. During the re-programming of the design chain 30 the other design chains 30' can continue to provide baseband processing while selected one or more partial reconfiguration regions 30a - 30f of said static design chain 30 are re-programmed.

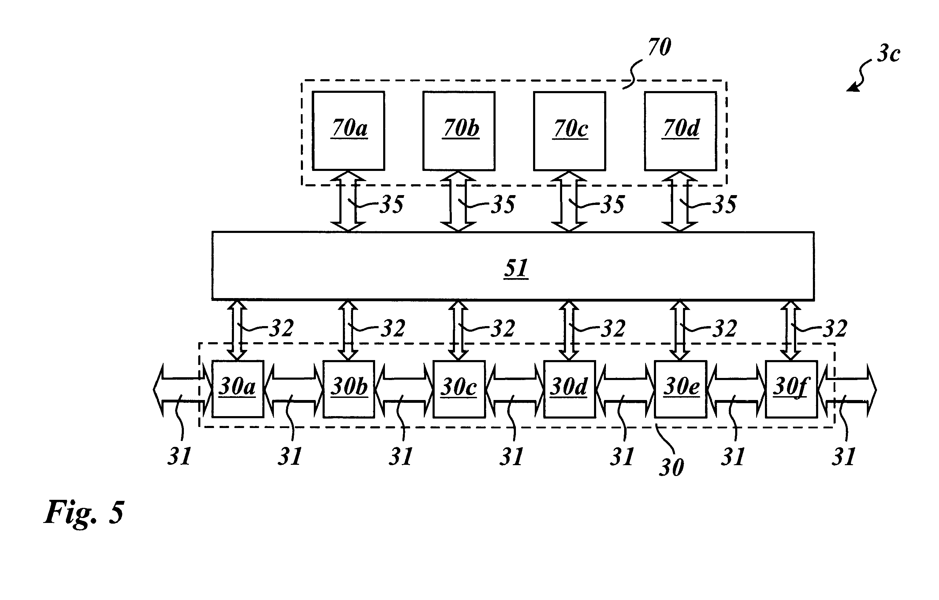

Figure 5 shows a functional view of a third embodiment of a field-programmable gate array 3c. The field-programmable gate array 3c of the multi standard base station 1 comprises four field-programmable gate array resources 70a, 70b, 70c, 70d. Preferably providing hard-macro multipliers, memory and/or I/O pins. The one or more field-programmable gate array resources 70a, 70b, 70c, 70d are interconnected with a design dependent connection module 51 by means of a static bus 35 of the static bus system. The design dependent connection module 51 is similar to the connection module 50 of the second embodiment. One or more of the partial reconfiguration regions 30a - 30f forming a static design chain 30 provided by the field-programmable gate array 3c are connected with the design dependent connection module 51 by means of the static bus 32. In the present third embodiment of the FPGA 3c, the bus width of the interconnection indicated by the arrow 31 is 128bit wide, the bus width of the interconnection indicated by the arrow 32 is 8bit wide, and the bus width of the interconnection indicated by the arrow 33 is 48 wide. The field-programmable gate array resources 70a, 70b, 70c, 70d enable sharing of frequently and by many common functional modules of the FPGA 3c, wherein the modules are partial reconfiguration modules or modules required for baseband processing. In particular, the areas size of the FPGA 3c occupied by the field-programmable gate array resources 70a, 70b, 70c, 70d is larger than the areas size of the FPGA 3c occupied by the partial reconfiguration modules, i.e. the respective partial reconfiguration regions 30a - 30f, since some of functions are in the present case provided by the field-programmable gate array resources 70a, 70b, 70c, 70d.

Summarizing, the basic idea of multi standard base station 1 of the present invention is as follows:

An available area of a FPGA 3c is partitioned in may partial reconfiguration regions 30a - 30f. An appropriate bus static system is introduced as well as special components for the setup of the complete baseband processing, e.g. bypass module, low complexity routing/switching connection modules 51.

The static architecture design is a basis of the present invention, which comprises the static bus system. The complexity of the static bus system is matched to the demands of the baseband processing functions. To be future-proof with respect to future radio standards the static bus system is easily scalable and may be dimensioned beforehand including slack.

As part of the partial reconfiguration technology the static design has one or more partial reconfiguration regions which are formed as the static design chain 30. Clearly, the size and amount of partial reconfigurations defined on the FPGA 3c depends on the supported radio standard components or modules and their granularity as well as possible future radio standards.

The partial reconfiguration regions are "placeholders" for the radio standard functionality or modules. These modules may be developed and compiled separately. An internal - inside the FPGA 3c, e.g. embedded processor - or external - e.g. via the JTAG Port (JTAG = Joint Test Action Group) - initiator can activate and control the download of each partially reconfiguration module to the corresponding partial reconfiguration region 30a - 30f without interrupting or influencing the rest of the FPGA functionality, i.e. while baseband processing is continued.

## Claims

1. A multi standard base station (1) for supporting two or more radio standards of a telecommunication network comprising
a processing unit (2),
wherein the processing unit (2) of the multi standard base station (1) comprises one or more field-programmable gate arrays (3a, 3b, 3c, 3d) providing a plurality of partial reconfiguration regions (30a, 30b, 30c, 30d, 30e, 30f),
wherein said plurality of partial reconfiguration regions (30a, 30b, 30c, 30d, 30e, 30f) are of predefined size, comprise a plurality of logic circuits and are individually re-programmable during operation of the one or more field-programmable gate arrays (3a, 3b, 3c, 3d),
wherein two or more partial reconfiguration regions of said plurality of partial reconfiguration regions (30a, 30b, 30c, 30d, 30e, 30f) are programmed as partial reconfiguration modules for provision of baseband processing functions,
wherein at least three of said plurality of partial reconfiguration regions (30a, 30b, 30c, 30d, 30e, 30f) comprising at least two of said partial reconfiguration regions programmed as partial reconfiguration modules for provision of baseband processing functions are sequentially arranged and interconnected by a static bus system to form a static design chain (30) for successive execution of said partial reconfiguration modules of the static design chain (30), and
wherein each partial reconfiguration region of the static design chain (30) with the exception of the first partial reconfiguration region of the static design chain (30) is interconnected with its preceding partial reconfiguration region of the static design chain (30) by means of a respective static bus (31) of the static bus system.

2. A multi standard base station (1) according to claim 1,
wherein one or more partial reconfiguration regions of said plurality of partial reconfiguration regions (30a, 30b, 30c, 30d, 30e, 30f) are programmed as bypass modules (30b) for interconnecting neighboring partial reconfiguration regions (30a, 30c).

3. A multi standard base station (1) according to claim 1,
wherein the one or more field-programmable gate arrays (3a, 3b, 3c, 3d) comprise one or more connection modules (50) for interconnecting one or more partial reconfiguration regions of said plurality of partial reconfiguration regions (30a, 30b, 30c, 30d, 30e, 30f).

4. A multi standard base station (1) according to claim 1,
wherein one or more field-programmable gate arrays of the one or more field-programmable gate arrays (3a, 3b, 3c, 3d) comprise two or more static design chains (30, 30').

5. A multi standard base station (1) according to claim 4,
wherein the two or more static design chains (30, 30') are interconnected by one or more connection modules (50) provided by the one or more field-programmable gate arrays (3a, 3b, 3c, 3d) and/or are interconnected by the static bus system.

6. A multi standard base station (1) according to claim 1,
wherein one or more of the one or more field-programmable gate arrays (3a, 3b, 3c, 3d) provide a static logic (60) interconnected with said plurality of partial reconfiguration regions (30a, 30b, 30c, 30d, 30e, 30f) by means of a connection module (50).

7. A multi standard base station (1) according to claim 1,
wherein each of the two or more partial reconfiguration region programmed as partial reconfiguration modules comprises a sub module providing a bus macro (34) defining a predefined interface to the static bus system (31).

8. A multi standard base station (1) according to claim 1,
wherein one or more of the one or more field-programmable gate arrays (3a, 3b, 3c, 3d) comprise one or more field-programmable gate array resources (70a, 70b, 70c, 70d), preferably providing hard-macro multipliers, memory and/or I/O pins, and
wherein the one or more field-programmable gate array resources (70a, 70b, 70c, 70d) are interconnected with one or more of the partial reconfiguration regions (30a, 30b, 30c, 30d, 30e, 30f) provided by the one or more field-programmable gate arrays (3a, 3b, 3c, 3d) and/or with the static design chain (30) by means of one or more partial reconfiguration regions provided by the one or more field-programmable gate arrays (3a, 3b, 3c, 3d) programmed as connection module (51).

9. A multi standard base station (1) according to claim 1
wherein the two or more partial reconfiguration region of said plurality of partial reconfiguration regions (30a, 30b, 30c, 30d, 30e, 30f) programmed as partial reconfiguration modules for provision of baseband processing functions, provide a functionality of the group of CDMA/OFDM processing, CRC, Scrambling, Encoding, Decoding and Mapping.

10. A multi standard base station (1) according to claim 1,
wherein one or more of the plurality of partial reconfiguration regions (30a, 30b, 30c, 30d, 30e, 30f) provided by the one or more field-programmable gate arrays (3a, 3b, 3c, 3d) are of different size.

11. A multi standard base station (1) according to claim 1,
wherein the multi standard base station (1) is adapted to support two or more radio standards of the group of GMS, UMTS, Edge, WiMAX by means of the two or more partial reconfiguration regions (30a, 30b, 30c, 30d, 30e, 30f) programmed as partial reconfiguration modules for provision of baseband processing functions.

12. A multi standard base station (1) according to claim 1,
wherein the processing unit (2) of the multi standard base station (1) comprises an interface and controlling unit (4) for connecting and controlling the one or more field-programmable gate arrays (3a, 3b, 3c, 3d).

13. A multi standard base station (1) according to claim 1,
wherein one or more partial reconfiguration regions provided by the one or more field-programmable gate arrays (3a, 3b, 3c, 3d) are programmed as connection modules (50) for interconnecting one or more partial reconfiguration regions of said plurality of partial reconfiguration regions (30a, 30b, 30c, 30d, 30e, 30f).

14. Method of supporting two or more radio standards by a multi standard base station (1) of a telecommunication network,
wherein the method comprises the steps of:
providing a processing unit (2) which comprises one or more field-programmable gate arrays (3a, 3b, 3c, 3d), the one or more field-programmable gate arrays (3a, 3b, 3c, 3d) comprise a plurality of logic circuits;
defining a plurality of partial reconfiguration regions (30a, 30b, 30c, 30d, 30e, 30f) of predefined size, the plurality of partial reconfiguration regions (30a, 30b, 30c, 30d, 30e, 30f) are provided by the one or more field-programmable gate arrays (3a, 3b, 3c, 3d);
programming two or more partial reconfiguration regions of said plurality partial reconfiguration regions (30a, 30b, 30c, 30d, 30e, 30f) as partial reconfiguration modules for provision of baseband processing functions; creating a group of at least three of said plurality of partial reconfiguration regions (30a, 30b, 30c, 30d, 30e, 30f), the group comprising at least two of said partial reconfiguration regions programmed as partial reconfiguration modules for provision of baseband processing functions, said partial reconfiguration regions of the group are sequentially arranged and interconnected by a static bus system to form a static design chain (30) for successive execution of said partial reconfiguration modules of the group, and each partial reconfiguration region of the static design chain (30) with the exception of the first partial reconfiguration region of the static design chain (30) is interconnected with its preceding partial reconfiguration region of the static design chain (30) by means of a respective static bus (31) of the static bus system; and
individually re-programming one or more partial reconfiguration regions (30ee) of the plurality partial reconfiguration regions (30a, 30b, 30c, 30d, 30e, 30f) during operation of the one or more field-programmable gate arrays (3a, 3b, 3c, 3d).

15. Method according to claim 14,
wherein the method comprises the steps of:
creating a further group of at least three of said plurality of partial reconfiguration regions (30a', 30b', 30c', 30d', 30e', 30f'), the further group comprising at least two of said partial reconfiguration regions programmed as partial reconfiguration modules for provision of baseband processing functions, said partial reconfiguration regions of the further group are sequentially arranged and interconnected by a static bus system to form a further static design chain (30') for successive execution of said partial reconfiguration modules of the further group, and
each partial reconfiguration region of the further static design chain (30') with the exception of the first partial reconfiguration region of the further static design chain (30') is interconnected with its preceding partial reconfiguration region of the further static design chain (30') by means of a respective static bus (31') of the static bus system; and
re-programming one or more partial reconfiguration regions (30ee) of the group and/or the further group for dedicating the static design chain (30) and/or the further static design chain (30') to a radio standard of the two or more radio standards during operation of the one or more field-programmable gate arrays (3a, 3b, 3c, 3d) for providing load balanced baseband processing.

## Amended claims

### Amended claims in accordance with Rule 137(2) EPC.

**1.** A multi standard base station (1) for supporting two or more radio standards of a telecommunication network comprising
a processing unit (2),
wherein the processing unit (2) of the multi standard base station (1) comprises one or more field-programmable gate arrays (3a, 3b, 3c, 3d) providing a plurality of partial reconfiguration regions (30a, 30b, 30c, 30d, 30e, 30f) interconnected by a bus system,
**characterized in,**
**that** said plurality of partial reconfiguration regions (30a, 30b, 30c, 30d, 30e, 30f) are of predefined size, comprise a plurality of logic circuits and are individually re-programmable during operation of the one or more field-programmable gate arrays (3a, 3b, 3c, 3d),
**that** two or more partial reconfiguration regions of said plurality of partial reconfiguration regions (30a, 30b, 30c, 30d, 30e, 30f) are programmed as partial reconfiguration modules for provision of baseband processing functions,
**that** at least three of said plurality of partial reconfiguration regions (30a, 30b, 30c, 30d, 30e, 30f) comprising at least two of said partial reconfiguration regions programmed as partial reconfiguration modules for provision of baseband processing functions are sequentially arranged and interconnected by the bus system, which is a static bus system, to form a static design chain (30) for successive execution of said partial reconfiguration modules of the static design chain (30), and
**that** each partial reconfiguration region of the static design chain (30) with the exception of the first partial reconfiguration region of the static design chain (30) is interconnected with its preceding partial reconfiguration region of the static design chain (30) by means of a respective static bus (31) of the static bus system.

**2.** A multi standard base station (1) according to claim 1,
wherein one or more partial reconfiguration regions of said plurality of partial reconfiguration regions (30a, 30b, 30c, 30d, 30e, 30f) are programmed as bypass modules (30b) for interconnecting neighboring partial reconfiguration regions (30a, 30c).

**3.** A multi standard base station (1) according to claim 1,
wherein the one or more field-programmable gate arrays (3a, 3b, 3c, 3d) comprise one or more connection modules (50) for interconnecting one or more partial reconfiguration regions of said plurality of partial reconfiguration regions (30a, 30b, 30c, 30d, 30e, 30f).

**4.** A multi standard base station (1) according to claim 1,
wherein one or more field-programmable gate arrays of the one or more field-programmable gate arrays (3a, 3b, 3c, 3d) comprise two or more static design chains (30, 30').

**5.** A multi standard base station (1) according to claim 4,
wherein the two or more static design chains (30, 30') are interconnected by one or more connection modules (50) provided by the one or more field-programmable gate arrays (3a, 3b, 3c, 3d) and/or are interconnected by the static bus system.

**6.** A multi standard base station (1) according to claim 1,
wherein one or more of the one or more field-programmable gate arrays (3a, 3b, 3c, 3d) provide a static logic (60) interconnected with said plurality of partial reconfiguration regions (30a, 30b, 30c, 30d, 30e, 30f) by means of a connection module (50).

**7.** A multi standard base station (1) according to claim 1,
wherein each of the two or more partial reconfiguration region programmed as partial reconfiguration modules comprises a sub module providing a bus macro (34) defining a predefined interface to the static bus system (31).

**8.** A multi standard base station (1) according to claim 1,
wherein one or more of the one or more field-programmable gate arrays (3a, 3b, 3c, 3d) comprise one or more field-programmable gate array resources (70a, 70b, 70c, 70d), preferably providing hard-macro multipliers, memory and/or I/O pins, and
wherein the one or more field-programmable gate array resources (70a, 70b, 70c, 70d) are interconnected with one or more of the partial reconfiguration regions (30a, 30b, 30c, 30d, 30e, 30f) provided by the one or more field-programmable gate arrays (3a, 3b, 3c, 3d) and/or with the static design chain (30) by means of one or more partial reconfiguration regions provided by the one or more field-programmable gate arrays (3a, 3b, 3c, 3d) programmed as connection module (51).

**9.** A multi standard base station (1) according to claim 1
wherein the two or more partial reconfiguration region of said plurality of partial reconfiguration regions (30a, 30b, 30c, 30d, 30e, 30f) programmed as partial reconfiguration modules for provision of baseband processing functions, provide a functionality of the group of CDMA/OFDM processing, CRC, Scrambling, Encoding, Decoding and Mapping.

**10.** A multi standard base station (1) according to claim 1,
wherein one or more of the plurality of partial reconfiguration regions (30a, 30b, 30c, 30d, 30e, 30f) provided by the one or more field-programmable gate arrays (3a, 3b, 3c, 3d) are of different size.

**11.** A multi standard base station (1) according to claim 1,
wherein the multi standard base station (1) is adapted to support two or more radio standards of the group of GMS, UMTS, Edge, WiMAX by means of the two or more partial reconfiguration regions (30a, 30b, 30c, 30d, 30e, 30f) programmed as partial reconfiguration modules for provision of baseband processing functions.

**12.** A multi standard base station (1) according to claim 1,
wherein the processing unit (2) of the multi standard base station (1) comprises an interface and controlling unit (4) for connecting and controlling the one or more field-programmable gate arrays (3a, 3b, 3c, 3d).

**13.** A multi standard base station (1) according to claim 1,
wherein one or more partial reconfiguration regions provided by the one or more field-programmable gate arrays (3a, 3b, 3c, 3d) are programmed as connection modules (50) for interconnecting one or more partial reconfiguration regions of said plurality of partial reconfiguration regions (30a, 30b, 30c, 30d, 30e, 30f).

**14.** Method of supporting two or more radio standards by a multi standard base station (1) of a telecommunication network,
wherein the method comprises the steps of:
providing a processing unit (2) which comprises one or more field-programmable gate arrays (3a, 3b, 3c, 3d), the one or more field-programmable gate arrays (3a, 3b, 3c, 3d) comprise a plurality of logic circuits;
defining a plurality of partial reconfiguration regions (30a, 30b, 30c, 30d, 30e, 30f) of predefined size, the plurality of partial reconfiguration regions (30a, 30b, 30c, 30d, 30e, 30f) are provided by the one or more field-programmable gate arrays (3a, 3b, 3c, 3d);
programming two or more partial reconfiguration regions of said plurality partial reconfiguration regions (30a, 30b, 30c, 30d, 30e, 30f) as partial reconfiguration modules for provision of baseband processing functions;
creating a group of at least three of said plurality of partial reconfiguration regions (30a, 30b, 30c, 30d, 30e, 30f), the group comprising at least two of said partial reconfiguration regions programmed as partial reconfiguration modules for provision of baseband processing functions,
said partial reconfiguration regions of the group are sequentially arranged and interconnected by a static bus system to form a static design chain (30) for successive execution of said partial reconfiguration modules of the group, and each partial reconfiguration region of the static design chain (30) with the exception of the first partial reconfiguration region of the static design chain (30) is interconnected with its preceding partial reconfiguration region of the static design chain (30) by means of a respective static bus (31) of the static bus system; and
individually re-programming one or more partial reconfiguration regions (30ee) of the plurality partial reconfiguration regions (30a, 30b, 30c, 30d, 30e, 30f) during operation of the one or more field-programmable gate arrays (3a, 3b, 3c, 3d).

**15.** Method according to claim 14,
wherein the method comprises the steps of:
creating a further group of at least three of said plurality of partial reconfiguration regions (30a', 30b', 30c', 30d', 30e', 30f'), the further group comprising at least two of said partial reconfiguration regions programmed as partial reconfiguration modules for provision of baseband processing functions, said partial reconfiguration regions of the further group are sequentially arranged and interconnected by a static bus system to form a further static design chain (30') for successive execution of said partial reconfiguration modules of the further group, and
each partial reconfiguration region of the further static design chain (30') with the exception of the first partial reconfiguration region of the further static design chain (30') is interconnected with its preceding partial reconfiguration region of the further static design chain (30') by means of a respective static bus (31') of the static bus system; and
re-programming one or more partial reconfiguration regions (30ee) of the group and/or the further group for dedicating the static design chain (30) and/or the further static design chain (30') to a radio standard of the two or more radio standards during operation of the one or more field-programmable gate arrays (3a, 3b, 3c, 3d) for providing load balanced baseband processing.
